(19) Europäisches Patentamt
European Patent Office
Office européen des brevets

(11) **EP 1 375 881 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(51) Int Cl.:
*F02D 41/18* *(2006.01)*       *F02D 41/00* *(2006.01)*

(21) Anmeldenummer: **03005773.1**

(22) Anmeldetag: **14.03.2003**

(54) **Verfahren zur Bestimmung der Zylinderfüllung einer Brennkraftmaschine mit variabler Ventilhubverstellung, Steuerelement sowie Brennkraftmaschine**

Method for determining the filling of a cylinder in an internal combustion engine with variable valve timing, control unit and internal combustion engine

Procédé de détermination du remplissage d'un cylindre dans un moteur à combustion interne, élément de commande et moteur à combustion interne

(84) Benannte Vertragsstaaten:
**DE FR IT**

(30) Priorität: **18.06.2002 DE 10227064**

(43) Veröffentlichungstag der Anmeldung:
**02.01.2004 Patentblatt 2004/01**

(73) Patentinhaber: **ROBERT BOSCH GMBH**
**70442 Stuttgart (DE)**

(72) Erfinder: **Wild, Ernst**
**71739 Oberriexingen (DE)**

(56) Entgegenhaltungen:
**WO-A-01/36800          WO-A-96/32579**
**DE-A1- 19 740 970       US-B1- 6 196 197**

**Beschreibung**

Die vorliegende Erfindung betrifft ein Verfahren zur Bestimmung der Zylinderfüllung bei einer Brennkraftmaschine mit variabler Ventilhubverstellung.

Brennkraftmaschinen und speziell Brennkraftmaschinen für Kraftfahrzeuge weisen ein Ansaugrohr mit einer zugeordneten Drosselklappe zur Steuerung der Luftströmung im Ansaugrohr auf. Es ist wenigstens ein Brennraum vorgesehen, wobei jeder Brennraum wenigstens ein Einlassventil aufweist.

Daneben ist es auch bekannt, bei Brennkraftmaschinen Einlassventile mit variabler Ventilhubsteuerung zu verwenden. Mittels der Veränderung des Ventilhubes wird die in die Brennkammer einströmende Luftmenge verändert.

Bei derartigen Fahrzeugen mit variabler Ventilhubsteuerung ist es also nicht mehr ausreichend, den Massenstrom über die Drosselklappe zu ermitteln, um ein Maß für die Zylinderfüllung, also den Füllungsgrad des Brennraums mit Luft, zu erhalten. Andererseits ist es wichtig, die tatsächlich in die Brennkammer einströmende Luftmenge zu kennen, da aufgrund dieser Kenngröße die in die Brennkammer einzuspritzende Kraftstoffmenge zu bestimmen ist. Kraftstoffmenge und zur Verfügung stehende Verbrennungsluft müssen aufeinander abgestimmt sein, beispielsweise um eine möglichst vollständige und damit schadstoffarme Verbrennung zu erreichen.

Aus der WO 96/32579 ist ein Verfahren bekannt, mit dem nach Messung einiger Eingangsgrößen mit Hilfe von Durchflussgleichungen die in den Brennraum einer Brennkraftmaschine einströmende Verbrennungsluft modellgestützt bestimmt werden kann.

Aufgabe der Erfindung ist es, die Ermittlung der Zylinderfüllung mit Verbrennungsluft aufgrund einer möglichst geringen Anzahl von über Sensoren zu erfassenden Grössen oder daraus abgeleiteter Grössen zu ermitteln.

Diese Aufgabe wird durch ein Verfahren mit den Merkmalen des Anspruchs 1, sowie durch ein Speicherelement und eine Brennkraftmaschine gemäß den nebengeordneten Patentansprüchen gelöst.

Vorteile der Ermittlung der Zylinderfüllung aufgrund lediglich weniger von einem Sensor erfasster Signale sind zum einen, dass nur wenige Sensoren zur Durchführung des Verfahrens benötigt werden und somit die Durchführung einer entsprechenden Steuerung kostengünstig realisiert werden kann. Zum anderen bildet das Verfahren auch eine günstige Möglichkeit, dann, wenn in dem Fahrzeug weitere Sensoren verwendet werden, das Verfahren bei Ausfall eines Teils dieser Sensoren zu verwenden und so eine Notlauffunktion, die ein Liegenbleiben des Fahrzeugs verhindert, zu gewährleisten. Daneben kann das Verfahren auch einer Plausibilisierung der Sensorsignale und der Ergebnisse eines anderen, mehr Sensorsignale berücksichtigenden Verfahrens dienen. Speziell kann durch das erfindungsgemässe Verfahren ein Sensor für den Druck vor der Drosselklappe eingespart werden. Zur Bestimmung des Drucks vor der Drosselklappe wird ein Modell verwendet, das sich auf Grössen stützt, die ohnehin für die Steuerung von Drosselklappe und Einlassventilverstellung benötigt werden.

Das Verfahren gemäss der Erfindung bietet also eine Grundfunktionalität aufgrund einer hinreichenden Anzahl von Sensoren und Sensorsignale, wobei das Verfahren durch Erhöhung der Anzahl der Sensorsignale, also der Verwendung weiterer Sensoren, größere Genauigkeit erlangen kann.

Gemäß der Erfindung wird zunächst der über die Drosselklappe fließende Luftmassenstrom unter Verwendung eines angenommenen Druckes vor der Drosselklappe ermittelt. Unabhängig davon wird der Luftmassenstrom über das Einlassventil ermittelt. Die Differenz der beiden Luftmassenströme wird durch Veränderung des angenommenen Druckes vor der Drosselklappe so aneinander angepasst, dass die ermittelten Werte der beiden Luftmassenströme einander entsprechen.

Der Luftmassenstrom über die Drosselklappe kann dabei als Produkt aus einem bei Normbedingungen gegebenem Normluftmassenstrom mit Korrekturfaktoren ermittelt werden. Dabei können als Korrekturfaktoren insbesondere Größen herangezogen werden, die den Saugrohrdruck, eine Lufttemperatur vor der Drosselklappe und die Strömungsgeschwindigkeit über die Drosselklappe repräsentieren.

Auch der Luftmassenstrom über das Einlassventil kann als Produkt aus einem bei gegebenen Normbedingungen vorhandenen Normluftmassenstrom bei einem vorhandenen Ventilhub mit Korrekturfaktoren ermittelt werden. Hierbei können als Korrekturfaktoren insbesondere der Saugrohrdruck und die Lufttemperatur vor der Drosselklappe und/oder hinter der Drosselklappe dienen, wobei angenommen werden kann, dass die Lufttemperatur vor der Drosselklappe ungefähr gleich der Lufttemperatur hinter der Drosselklappe und somit vor dem Einlassventil ist.

Ein Steuerelement, das insbesondere als Read-Only-Memory ausgestaltet ist und in einem Steuergerät einer Brennkraftmaschine angeordnet sein kann, ist gemäß bevorzugter Ausgestaltung der Erfindung zur Aufnahme eines Programms geeignet, das auf einem Mikroprozessor ablauffähig ist und zur Ausführung eines erfindungsgemäßen Verfahrens führt.

Gemäß der Erfindung weist eine Brennkraftmaschine, insbesondere eine Brennkraftmaschine für ein Kraftfahrzeug, ein Ansaugrohr auf. Dem Ansaugrohr ist eine Drosselklappe zugeordnet. Ferner ist wenigstens ein Einlassventil mit variabler Ventilhubsteuerung für jeden Brennraum der Brennkraftmaschine vorhanden. Über Drosselklappe und Einlassventil gelangt Luft in den Brennraum. Es ist ein Steuergerät vorhanden, das die Zylinderfüllung mit Luft allein aufgrund der Größen Drosselklappenwinkel, Einlassventilhub, Lufttemperatur vor der Drosselklappe und/oder hinter der Drosselklappe, Saugrohrdruck und Motordrehzahl ermittelt.

Die vorstehenden und weiteren Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können und vorteilhafte sowie für sich schutzfähige Ausführungen darstellen können, für die hier Schutz beansprucht wird.

Im übrigen ist die Erfindung auch anhand der in den Zeichnungen dargestellten Ausführungsformen näher erläutert. Dabei zeigt:

Fig. 1    ein schematisches Blockschaltbild eines erfindungsgemäßen Verfahrens und

Fig. 2    eine schematische Darstellung einer Brennkammer einer Brennkraftmaschine mit zugeordnetem Ansaugrohr und Drosselklappe sowie Ventil mit variablem Ventilhub.

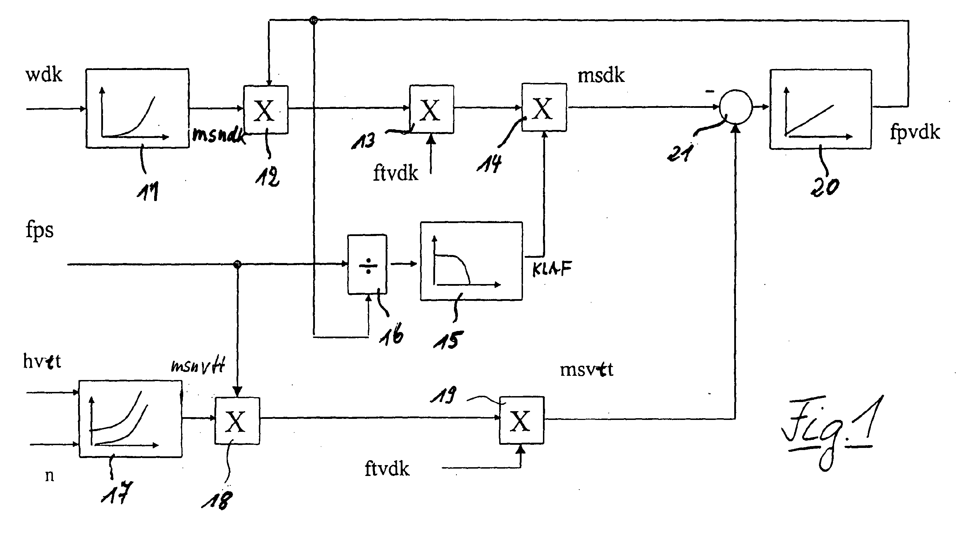

Fig. 1 zeigt ein schematisches Blockdiagramm eines erfindungsgemäßen Verfahrens zur Ermittlung der Zylinderfüllung.

Aufgrund des zugeführten Sensorsignals des Drosselklappenwinkels wdk wird aus der Kennlinie 11 der unter Normbedingungen vorhandene Luftmassenstrom über die Drosselklappe msndk ermittelt. Bei Verwendung zweier Eingangsgrößen könnte auch ein Kennfeld verwendet werden. Dieses Signal wird dem Multiplizierer 12 zugeführt und dort mit dem beispielsweise aufgrund vorhergehender Berechnung bekannten, angenommenen Wert für den Druck vor der Drosselklappe fpvdk multipliziert. Das Ergebnis dieser Multiplikation wird dem weiteren Multiplizierer 13 zugeführt und dort mit einem vom Signal des Temperatursensors für die Temperatur vor der Drosselklappe tvdk abhängigen Faktor ftvdk multipliziert. Das Ergebnis dieser Multiplikation wird als weiterer Faktor einem dritten Multiplizierer 14 zugeführt. Diesem Multiplizierer 14 wird als weiterer Faktor eine die Strömungsgeschwindigkeit über die Drosselklappe repräsentierende Größe klaf zugeführt. Das Ergebnis dieser Multiplikation ist ein Wert für den Luftmassenstrom über die Drosselklappe msdk. Er wird dem Subtrahierer 21 zugeführt.

Der die Strömungsgeschwindigkeit über die Drosselklappe repräsentierende Faktor klaf wird mittels der Kennlinie 15 ermittelt. Hierzu wird dem Kennfeld 15 als Eingangsgröße die in dem Dividierer 16 ermittelte Größe zugeführt. Im Dividierer 16 wird ein aus dem Saugrohrdruck ps ermittelte Faktor fps als Dividend und angenommene Wert für den Druck vor der Drosselklappe fpvdk als Divisor zugeführt.

Es ergibt sich somit die mathematische Beziehung:

$$msdk = msndk\ (wdk) * fpvdk * ftvdk * klaf\ (ps/pvdk)$$

Der unter Normbedingungen in Abhängigkeit von dem Drosselklappenwinkel wdk ermittelte Luftmassenstrom msndk wird mit den Korrekturfaktoren für den Druck vor der Drosselklappe $fpvdk = pvdk/1013hpa$, für die Temperatur vor der Drosselklappe $ftvdk = \sqrt{(273°K/tvdk)}$ und dem Faktor klaf für die Strömungsgeschwindigkeit abhängig vom Druckverhältnis aus Saugrohrdruck und Druck vor Drosselklappe multipliziert, um den bei aktuellen Bedingungen auftretenden Luftmassenstrom über die Drosselklappe msdk zu erhalten. Durch Division mit dem Produkt aus Motordrehzahl n und einer Konstanten k, die die Zylinderzahl in Abhängigkeit von der Zahl der Arbeitstakte pro Zylinder repräsentiert, erhält man den Zufluß ins Saugrohr in der Einheit relative Füllung im Brennraum pro Hub.

Der Luftmassenstrom msnvtt durch das wenigstens eine Einlassventil in den Brennraum unter Normbedingungen wird mittels des Kennfelds 17 in Abhängigkeit von der Motordrehzahl n und dem Ventilhub hvtt ermittelt. Der Luftmassenstrom msnvtt über das Einlassventil kann zusätzlich noch von weiteren Größen, wie Nockenwellenwinkel für Einlassventil öffnen und Auslassventil schließen, abhängig sein. Solche weiteren Größen könnten durch ein mehrdimensionales Kennfeld berücksichtigt sein. Das Ergebnis der Kennfeldabfrage wird dem Multiplizierer 18 zugeführt, der diesen Wert mit dem Faktor für den Saugrohrdruck fps multipliziert und das Ergebnis dann dem weiteren Multiplizierer 19 zuführt. Das Ergebnis wird dort mit dem weiteren Faktor ftvdk, der die Temperatur vor dem Einlassventil und hinter der Drosselklappe repräsentiert, multipliziert. Näherungsweise kann die Temperatur hinter der Drosselklappe gleich der Temperatur vor der Drosselklappe gesetzt werden. Dies ermöglicht die Verwendung des Faktors ftvdk. Man erhält damit den Luftmassenstrom msvtt über das wenigstens eine Einlassventil, der dann wie der Luftmassenstrom über die Drosselklappe msdk dem Subtrahierer 21 zugeführt wird, gemäß der Gleichung:

$$msvtt = msnvtt\ (hvtt, n) * fps * ftvdk.$$

Auch der Wert des Luftmassenstroms msvtt über das wenigstens eine Einlassventil kann durch Division mit dem Produkt aus der Konstante k mit der Motordrehzahl n als eine relative Zylinderfüllung ausgedrückt werden.

Die Werte der beiden Luftmassenströme msdk und msvtt werden also dem Subtrahierer 21 zugeführt, der die Differenz hieraus ermittelt und dem Integrierer 20 zuführt. Der Integrierer 20 ermittelt aus der Differenz dann den Wert für den Faktor fpvdk für den Druck vor der Drosselklappe. Zur Veränderung des Faktors fpvdk im Integrierer 20 wird davon ausgegangen, dass im eingeschwungenen oder stationären Betrieb der Massenstrom msdk über die Drosselklappe und der Massenstrom msvtt über das Einlassventil gleich sind. Der Faktor fpvdk wird so lange verändert und auf die Berechnung des Massenstroms msdk über die Drosselklappe zurückgekoppelt, bis die Differenz der Massenströme msdk und msvtt gleich Null ist. Dabei stellt sich der aktuelle Druck pvdk vor der Drosselklappe ein, der bis auf den Druckabfall am Luftfilter mit dem Umgebungsdruck identisch ist. Dabei ist eine Zeitkonstante des Integrierers so zu wählen, dass der zurückgekoppelte Wert nicht durch zeitweilige instationäre Vorgänge verfälscht wird.

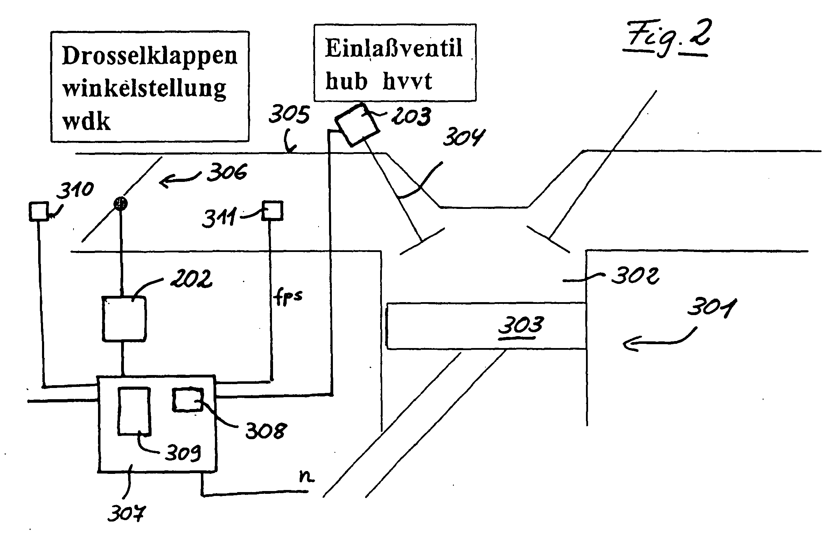

Die Fig. 2 zeigt in schematischer Darstellung eine Brennkraftmaschine 301. Die Brennkraftmaschine weist eine Brennkammer 302 auf, die in einem Zylinder angeordnet ist, in dem ein Hubkolben 303 beweglich gehalten ist. Die Zufuhr von Verbrennungsluft in den Brennraum erfolgt über das Einlassventil 304. Das Einlassventil 304 weist eine Steuereinrichtung 203 auf mittels der der Ventilhub des Einlassventils 304 veränderbar und erfaßbar ist. Die angesaugte Luft gelangt über das Saugrohr 305 zu dem Einlassventil 304 und der Brennkammer 302. In dem Saugrohr 305 ist die Drosselklappe 306 angeordnet. Hinter der Drosselklappe 306 herrscht der Saugrohrdruck ps, der durch den Sensor 311 erfasst wird. Die Temperatur tvdk der Luft vor der Drosselklappe 306, d.h. der Ansaugluft, wird über den Sensor 310 erfasst. Für die Drosselklappe ist eine Stelleinrichtung 202 vorgesehen, über die der Drosselklappenwinkel wdk veränderbar und erfaßbar ist. Über die Bewegung des Kolbens 303, der eine Seite der Brennkammer 302 der Brennkraftmaschine abschließt, ergibt sich die Motordrehzahl n, die der Steuereinrichtung 307 ebenso wie die anderen Sensorsignale zugeführt wird.

In der Steuereinrichtung 307 ist ein Speicherelement 309 enthalten, das die für die auszuführenden Berechnungen erforderlichen Rechenregeln in Form eines auf dem Mikroprozessor 308 verarbeitbaren Programms enthält. Somit kann in der Steuereinrichtung 307 die Zylinderfüllung nach einem erfindungsgemäßen Verfahren, beispielsweise nach dem im Zusammenhang mit Figur 1 beschriebenen Verfahren, ermittelt werden.

**Patentansprüche**

1. Verfahren zur Bestimmung einer Zylinderfüllung bei einer Brennkraftmaschine mit variabler Ventilhubverstellung, bei der Luft über eine einem Ansaugrohr zugeordnete Drosselklappe und über wenigstens ein Einlassventil mit variabler Ventilhubsteuerung zur Beeinflussung des Ventilhubs einem Brennraum zugeführt wird, wobei die Zylinderfüllung allein aufgrund der Grössen

   - Drosselklappenwinkel (wdk)
   - Lufttemperatur vor der Drosselklappe (Tvdk) und/oder hinter der Drosselklappe
   - Saugrohrdruck (ps) und
   - Grössen, die zur Bestimmung eines Normluftmassenstroms über das Einlassventil unter vordefinierten Normbedingungen, insbesondere Einlassventilhub (hvtt) und Motordrehzahl (n), ausreichen, ermittelt wird,

   **dadurch gekennzeichnet,**
   **dass** ein über die Drosselklappe fliessender Luftmassenstrom (msdk) unter Verwendung eines angenommenen Druckes vor der Drosselklappe (fpvdk) unabhängig von einem über das Einlassventil strömenden Luftmassenstrom (msvtt) ermittelt wird und auf Grund der Differenz der beiden Luftmassenströme der angenommene Druck vor der Drosselklappe (fpvdk) derart angepasst wird, dass die ermittelten Werte der beiden Luftmassenströme einander entsprechen.

2. Verfahren nach Anspruch 1, **dadurch gekennzeichnet, dass** der Luftmassenstrom über die Drosselklappe (msdk) als Produkt aus einem bei gegebenen Drosselklappenwinkel (wdk) über die Drosselklappe unter Normbedingungen vorhandenen Normluftmassenstrom (msndk) mit Korrekturfaktoren ermittelt wird.

3. Verfahren nach Anspruch 2, **dadurch gekennzeichnet, dass** als Korrekturfaktoren eine den Saugrohrdruck, eine die Lufttemperatur vor der Drosselklappe und/oder hinter der Drosselklappe und eine die Strömungsgeschwindigkeit über die Drosselklappe repräsentierende Grösse dienen.

4. Verfahren nach einem der vorhergehenden Ansprüche, **dadurch gekennzeichnet, dass** der Luftmassenstrom über das Einlassventil (msvtt) als Produkt aus einem bei gegebenem Ventilhub (hvtt) über das wenigstens eine Einlassventil bei Normbedingungen gegebenen Normluftmassenstrom mit Korrekturfaktoren ermittelt wird.

5. Verfahren nach Anspruch 4, **dadurch gekennzeichnet, dass** als Korrekturfaktoren der Saugrohrdruck (ps) und die Lufttemperatur vor der Drosselklappe (ftvdk) und/oder hinter der Drosselklappe dienen.

6. Steuerelement, insbesondere Read-Only-Memory, für ein Steuergerät einer Brennkraftmaschine insbesondere eines Kraftfahrzeugs, **dadurch gekennzeichnet, dass** auf ihm ein Programm abgespeichert ist, das auf einem Rechengerät, wie einem Mikroprozessor, ablauffähig und zur Ausführung eines Verfahrens nach einem der vorhergehenden Ansprüche programmiert ist.

7. Brennkraftmaschine, insbesondere für ein Kraftfahrzeug, mit einer in einem Ansaugrohr angeordneten Drosselklappe und wenigstens einem Einlassventil mit variabler Ventilhubsteuerung für jeden Brennraum, über die Luft dem Brennraum zuführbar ist und mit einem Steuergerät, **dadurch gekennzeichnet, dass** das Steuergerät ein Speicherelement nach Anspruch 6 umfasst.

**Claims**

1. Method for determining a cylinder charge in an internal combustion engine having variable valve lift adjustment, in which method air is supplied via a throttle flap, which is assigned to an intake pipe, and via at least one inlet valve with variable valve lift adjustment, in order to influence the valve lift, to a combustion chamber, with the cylinder charge being determined only from the variables

   - throttle flap angle (wdk),
   - air temperature upstream of the throttle flap (Tvdk) and/or downstream of the throttle flap,
   - intake pipe pressure (ps) and
   - variables which are sufficient for determining a standard air mass flow via the inlet valve under predefined standard conditions, in particular inlet valve lift (hvtt) and engine speed (n),

   **characterized**
   **in that** an air mass flow (msdk) which flows via the throttle flap is determined using an assumed pressure upstream of the throttle flap (fpvdk) independently from an air mass flow (msvtt) which flows via the inlet valve, and on the basis of the difference of the two air mass flows, the assumed pressure upstream of the throttle flap (fpvdk) is adapted in such a way that the determined values of the two air mass flows correspond to one another.

2. Method according to Claim 1, **characterized in that** the air mass flow via the throttle flap (msdk) is determined as a product of a standard air mass flow (msndk), which flows via the throttle flap at a defined throttle flap angle (wdk) under standard conditions, with correction factors.

3. Method according to Claim 2, **characterized in that** a variable which represents the intake pipe pressure, a variable which represents the air temperature upstream of the throttle flap and/or downstream of the throttle flap and a variable which represents the flow speed via the throttle flap serve as correction factors.

4. Method according to one of the preceding claims, **characterized in that** the air mass flow via the inlet valve (msvtt) is determined as a product of a standard air mass flow, which flows via the at least one inlet valve at a defined throttle valve lift (hvtt) under standard conditions, with correction factors.

5. Method according to Claim 4, **characterized in that** the intake pipe pressure (ps) and the air temperature upstream of the throttle flap (ftvdk) and/or downstream of the throttle flap serve as correction factors.

6. Control element, in particular read-only memory, for a control unit of an internal combustion engine in particular of a motor vehicle, **characterized in that** a program is stored on said control element, which program can be executed on a processing unit such as a microprocessor and is programmed for carrying out a method according to one of the preceding claims.

7. Internal combustion engine, in particular for a motor vehicle, having a throttle flap arranged in an intake pipe and having at least one inlet valve with variable valve lift control for each combustion chamber, via which air can be supplied to the combustion chamber, and having a control unit, **characterized in that** the control unit comprises a memory element according to Claim 6.

**Revendications**

**1.** Procédé pour déterminer le remplissage des cylindres d'un moteur à combustion interne à réglage variable de levée de soupape selon lequel l'air est fourni par un volet d'étranglement installé dans une tubulure d'admission ainsi que par au moins une soupape d'admission à commande variable de levée pour influencer la course de la soupape dans une chambre de combustion, le remplissage du cylindre se déterminant à partir des grandeurs suivantes :

- angle du volet d'étranglement (wdk),
- température de l'air en amont du volet d'étranglement (Tvdk) et/ou en aval du volet d'étranglement,
- pression dans la tubulure d'admission (ps) et
- grandeurs suffisantes pour déterminer un débit massique d'air normalisé par la soupape d'admission sous des conditions normalisées prédéfinies, notamment la course de la soupape d'admission (hvtt) et la vitesse de rotation du moteur (n),

**caractérisé en ce qu'**
on détermine à l'aide du débit massique d'air (msdk) traversant le volet d'étranglement, en utilisant une pression admise en amont du volet d'étranglement (fpvdk) indépendamment du débit massique d'air (msvtt) passant sur la soupape d'admission, et à partir de la différence des deux débits massiques d'air, on adapte la pression admise en amont du volet d'étranglement (fpvdk) de façon que les valeurs déterminées des deux débits massiques d'air se correspondent.

**2.** Procédé selon la revendication 1,
**caractérisé en ce que**
le débit massique d'air passant sur le volet d'étranglement (msdk) se détermine comme produit d'un angle donné (wdk) du volet d'étranglement par le débit massique d'air normalisé (msndk) passant dans les conditions normales sur le volet d'étranglement, en appliquant des coefficients de correction.

**3.** Procédé selon la revendication 2,
**caractérisé en ce que**
les coefficients de correction sont une grandeur représentant la pression dans la tubulure d'admission, la température de l'air en amont du volet d'étranglement et/ou en aval du volet d'étranglement et la vitesse d'écoulement sur le volet d'étranglement.

**4.** Procédé selon l'une des revendications précédentes,
**caractérisé en ce que**
le débit massique d'air sur la soupape d'admission (msvtt) se détermine comme produit du débit massique d'air normalisé correspondant à une course de soupape (hvtt) donnée d'au moins une soupape d'admission dans des conditions normales pour un débit massique d'air normalisé, avec des coefficients de correction.

**5.** Procédé selon la revendication 4,
**caractérisé en ce que**
comme coefficients de correction on utilise la pression dans la tubulure d'admission (ps) et la température de l'air en amont du volet d'étranglement (ftvdk) et/ ou en aval du volet d'étranglement.

**6.** Elément de commande, notamment mémoire morte pour un appareil de commande d'un moteur à combustion interne, notamment d'un véhicule automobile,
**caractérisé en ce qu'**
il contient l'enregistrement d'un programme exécutable par un appareil de calcul tel qu'un microprocesseur et programmé pour exécuter un procédé selon l'une des revendications précédentes.

**7.** Moteur à combustion interne, notamment pour un véhicule automobile, comportant un volet d'étranglement installé dans la tubulure d'admission et au moins une soupape d'admission à commande variable de la levée de soupape pour chaque chambre de combustion servant à l'alimentation en air de la chambre de combustion et un appareil de commande **caractérisé en ce que** l'appareil de commande comporte un élément de mémoire selon la revendication 6.

Fig.1

EP 1 375 881 B1

EP 1 375 881 B1

$Fig. 2$

Drosselklappen
winkelstellung
wdk

Einlaßventil
hub hvvt

305

203

304

306

310

311

202

fps

302

301

303

308

309

307

n

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9632579 A